# EUROPEAN PATENT APPLICATION

(11) **EP 2 023 581 A2**
(43) Date of publication of application: **11.02.2009**
(21) Application number: 08013114.7
(22) Date of filing: 21.07.2008
(51) Int. Cl.: H04M 1/253, H04M 1/656, H04M 1/658

(54) **IP telephone terminal, IP telephone system and recording medium**

(30) Priority: 08.08.2007 JP 2007206756
(71) Applicant: Funai Electric Co., Ltd., Daito-shi, Osaka 574-0013 (JP)
(72) Inventor: Tsubota, Hirono, Daito-shi Osaka 574-0013 (JP); Izukawa, Shintaro, Daito-shi Osaka 574-0013 (JP); Ishibashi, Kenji, Daito-shi Osaka 574-0013 (JP); Tanabe, Hideki, Daito-shi Osaka 574-0013 (JP); Nishigaki, Hiroshi, Daito-shi Osaka 574-0013 (JP); Masaki, Yasuo, Daito-shi Osaka 574-0013 (JP)
(74) Representative: Grünecker, Kinkeldey, Stockmair & Schwanhäusser Anwaltssozietät

(57) **Abstract**

An IP telephone terminal outputs a call request for communication with a prescribed terminal and, if it is determined that connection failed, records the input voice. Thereafter, the IP telephone terminal determines that the prescribed telephone terminal has reached a state connectable through IP network, outputs a call request for communication with the prescribed terminal and if connection is determined to be established, transmits the recorded voice to the prescribed terminal.

## Description

### BACKGROUND OF THE INVENTION

### Field of the Invention

The present invention relates to an IP (Internet Protocol) telephone terminal and an IP telephone system and, more specifically, to an IP telephone terminal accepting a message recording, an IP telephone system including such an IP telephone terminal and a server, as well as to a recording medium.

### Description of the Background Art

Along with recent wide-spread use of internet devices, IP telephone systems providing telephone services using IP network come to be widely utilized. In an IP telephone system, different from a fixed telephone, a telephone terminal is not always connected to a line. Specifically, a fixed telephone is always connected to a telephone line, whereas in the IP telephone system, a telephone terminal is not always registered with a server.

The reason why the telephone terminal is not always registered with a server in the IP telephone system is that state of connection of the telephone terminal to the network varies dependent on power on/off of the telephone terminal or interception of communication on the network path. In the IP telephone systems as such, various proposals have been made in connection with failed communication.

By way of example, Patent Document 1 (Japanese Patent Laying-Open No. 09-321914) discloses a technique in which, if a communication could not be established in the IP telephone system, a voice mail is transmitted to a telephone terminal of a receiving side, to notify an incoming call.

Patent Document 2 (Japanese Patent Laying-Open No. 2006-270549) discloses a technique in which, if a communication could not be established in the IP telephone system, a message is transmitted from the calling side terminal to a server, and the message is saved in the server.

Patent Document 3 (Japanese Patent Laying-Open No. 2005-322974) discloses a technique in which, if a communication could not be established in the IP telephone system, information to that effect is stored in a dedicated device.

Patent Document 4 (Japanese Patent Laying-Open No. 2004-128794) discloses a technique in which, if a communication could not be established in the IP telephone system, an IP telephone terminal records a message, and the message is transmitted attached to an electronic mail having a mail address related to the IP telephone terminal of the called party as a destination.

As described above, various techniques for notifying, if a communication could not be established in the IP telephone system, the received side terminal of the failed call have been disclosed.

Techniques disclosed in Patent documents 1 and 4, however, require that the user of receiving side telephone terminal is in an environment allowing reception of an electronic mail, which poses a burden on the user.

Further, techniques disclosed in Patent Documents 2 and 3 require change in function of a server, or newly require installation of a dedicated device, posing a burden on a telephone system provider.

### SUMMARY OF THE INVENTION

The present invention was made in view of the forgoing, and its object is to notify, in an IP telephone system, failed call to the receiving side terminal if a communication could not be established, while minimizing required burden on the system.

The present invention provides an IP telephone terminal having a telephone function using an IP network, including: an input unit receiving an input of information; a first output unit outputting a call request for communication with a prescribed terminal, based on the input of information to the input unit; a first determining unit determining whether or not a connection has been established by the call request based on the input of information to the input unit; a recording unit recording, when it is determined by the first determining unit that the connection failed, voice input through the input unit; a second determining unit determining whether or not the prescribed terminal is in a state connectable through the IP network; a second output unit outputting a call request for communication with the prescribed terminal, based on a determination by the second determining unit that the prescribed terminal has reached a state connectable through the IP network; and a transmitting unit transmitting, when connection based on the call request output by the second output unit is determined to be established, the voice recorded by the recording unit to the prescribed terminal through the IP network.

Preferably, in the IP telephone terminal in accordance with the present invention, the second determining unit determines, at every constant time interval, whether or not the prescribed terminal is in a state connectable through the IP network.

Preferably, the IP telephone terminal in accordance with the present invention further includes a storage unit storing information, and the transmitting unit transmits, when connection based on the call request output by the second output unit is determined to be established, the voice recorded by the recording unit together with voice information stored in the storage unit.

Preferably, in the IP telephone terminal in accordance with the present invention, the transmitting unit transmits the voice recorded by the recording unit together with specific data that identifies the voice as such.

Preferably, in the IP telephone terminal in accordance with the present invention, the transmitting unit transmits the voice recorded by the recording unit as a packet; and the specific data is a specific code included in the packet of voice recorded by the recording unit.

Preferably, in the IP telephone terminal in accordance with the present invention, the recording unit records, when the specific data is transmitted, the voice transmitted together with the specific data.

Preferably, in the IP telephone terminal in accordance with the present invention, the second output unit outputs, when it is determined by the second determining unit that the prescribed terminal is in a state connectable through the IP network, a call request for communication with the prescribed terminal at every prescribed time interval.

The present invention provides an IP telephone system comprising an IP telephone terminal having telephone function using an IP network and a server connected to the IP telephone terminal through the IP network, wherein the IP telephone terminal includes: an input unit receiving an input of information; a first output unit outputting a call request for communication with a prescribed terminal, based on the input of information to the input unit; a first determining unit determining whether or not a connection has been established by the call request based on the input of information to the input unit; a recording unit recording, when it is determined by the first determining unit that the connection failed, voice input through the input unit; a second determining unit determining whether or not the prescribed terminal is in a state connectable through the IP network; a second output unit outputting a call request for communication with the prescribed terminal, based on a determination by the second determining unit that the prescribed terminal has reached a state connectable through the IP network; and a transmitting unit transmitting, when connection based on the call request output by the second output unit is determined to be established, the voice recorded by the recording unit to the prescribed terminal through the IP network.

The present invention provides a recording medium recording a computer readable program for controlling an IP telephone terminal having a telephone function using an IP network, causing a computer to execute the steps of: receiving an input of information; outputting a call request for communication with a prescribed terminal, based on the input of information; determining whether or not a connection has been established by the call request based on the input of information; when it is determined that the connection failed, receiving input of voice and recording the voice; determining whether or not the prescribed terminal is in a state connectable through the IP network; outputting a call request for communication with the prescribed terminal, based on a determination that the prescribed terminal has reached a state connectable through the IP network; and transmitting, when connection based on the call request, which is output based on the determination that the prescribed terminal is in a state connectable through the IP network, is determined to be established, the recorded voice to the prescribed terminal through the IP network.

According to the present invention, when a call request based on an input of information to the input means is output but connection to a prescribed terminal could not be established, voice input through the input means is recorded, and when the prescribed terminal mentioned above reaches a connectable state, the voice is transmitted to the prescribed terminal.

Therefore, the user of IP telephone terminal can reliably send the voice message to the prescribed terminal, without any design change of the server to save the message or without installing a dedicated device for saving the message.

Further, the timing at which the message is transmitted is a timing at which both the IP telephone terminal and the prescribed terminal are connectable. Therefore, after transmission of the message, it is possible for the users to start communication, and both users can get the good timing for communication.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 schematically shows a configuration of an IP telephone system including an example of IP telephone terminal in accordance with the present invention.
Fig. 2 schematically shows a configuration of a presence management unit shown in Fig. 1.
Fig. 3 schematically shows a configuration of a storage unit of Fig. 1.
Fig. 4 schematically shows contents stored in a registered terminal information storage unit shown in Fig. 2.
Fig. 5 schematically shows contents stored in a registered terminal information storage unit shown in Fig. 3.
Fig. 6 schematically shows contents stored in a message packet management information storage unit shown in Fig. 3.
Fig. 7 schematically shows contents stored in a received voice management information storage unit shown in Fig. 3.
Fig. 8 schematically shows a configuration of a message packet transmitted/received in the IP telephone system of Fig. 1.
Fig. 9 is a flowchart of a calling side terminal process executed by a telephone terminal in the IP telephone system of Fig. 1.
Fig. 10 is a flowchart of a calling side terminal process executed by a telephone terminal in the IP telephone system of Fig. 1.
Fig. 11 is a flow chart of a calling side terminal process executed by a telephone terminal in the IP telephone system of Fig. 1.
Fig. 12 is a flowchart of a packet receiving process sub-routine of Fig. 10.

### DESCRIPTION OF THE PREFERRED EMBODIMENTS

In the following, an embodiment of the present invention will be described with reference to the figures. In the following description, the same components are denoted by the same reference characters. Their names and functions are also the same. Therefore, detailed description thereof will not be repeated.

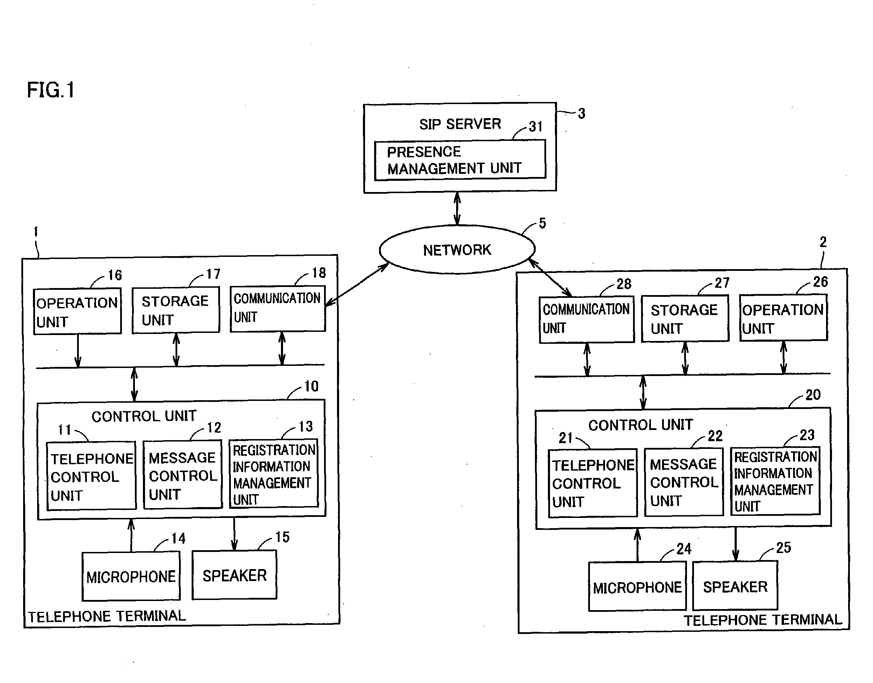

Fig. 1 schematically shows a configuration of the IP telephone system in accordance with the present invention. In the IP telephone system, IP telephone terminals 1 and 2, and an SIP (Session Initiation Protocol) server 3 are connected through a network 5. In the IP telephone system, VoIP (Voice over Internet Protocol) technique is utilized.

IP telephone terminal 1 includes a control unit 10 for controlling overall operation of IP telephone terminal 1. Further, IP telephone terminal 1 includes: an operation unit 16 operated by a user for inputting information to the IP telephone terminal 1; a storage unit 17 storing various data and programs; a communication unit 18 for transmitting/receiving information to/from SIP server 3 or IP telephone terminal 2; a speaker 15 for outputting voice; and a microphone 14 for inputting voice to IP telephone terminal 1. Storage unit 1 may be provided inside the IP telephone terminal 1, or it may be implemented by a recording medium that can be attached to/detached from the IP telephone terminal 1.

Control unit 10 includes: a telephone control unit 11 for realizing a telephone function on the telephone service utilizing VoIP technique; a message control unit 12 executing a process for recording message or the like related to the telephone function; and a registration information management unit 13 managing information related to an IP telephone terminal communicable through network 5.

IP telephone terminals 1 and 2 may have the same configuration. Specifically, IP telephone terminal 2 includes, similar to IP telephone terminal 1, a control unit 20, an operation unit 26, a storage unit 27, a communication unit 28, a speaker 25, and a microphone 24. Further, control unit 20 includes a telephone control unit 21, a message control unit 22, and a registration information management unit 23.

Though the number of telephone terminals communicable through network 5 is "2" in the IP telephone system of Fig. 1, the number is not limited in the IP telephone system in accordance with the present invention.

SIP server 3 includes a presence management unit 31. Presence management unit 31 manages information related to an IP telephone terminal that is in a communicable state through network 5 in the IP telephone system. Specifically, in the IP telephone system, when IP telephone terminal 1 or IP telephone terminal 2 connects to network 5 (log-in), SIP server 3 assigns an IP address to the telephone terminal, and manages information related to the telephone terminal in the presence management unit 31. In the present specification, the state in which an IP telephone terminal logs-in the network and has an IP address assigned will be referred to as the "registered state." Further, that the IP telephone terminal has its information recorded in a registered terminal information storage unit 311 is referred to as the terminal being "registered with SIP server 3."

In the IP telephone system in accordance with the present embodiment, when each IP telephone terminal is in the registered state and a piece of information of log-out corresponding to the IP telephone terminal is input or a connection path between the IP telephone terminal and network 5 is shut off, the registered state of the IP telephone terminal is cancelled, and the information related to the telephone terminal is deleted from registered terminal information storage unit 311.

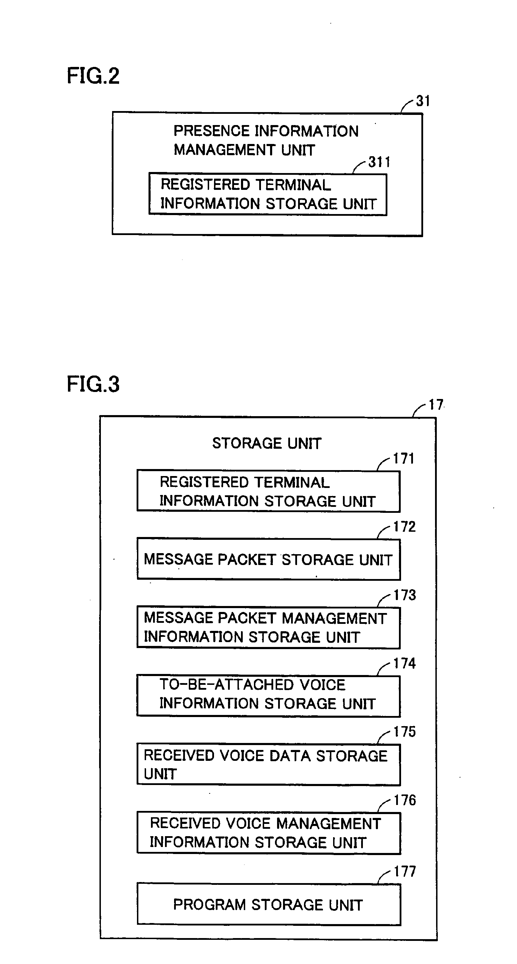

As shown in Fig. 2, in presence management unit 31, information related to the IP telephone terminal having the IP address assigned is stored in registered terminal information storage unit 311.

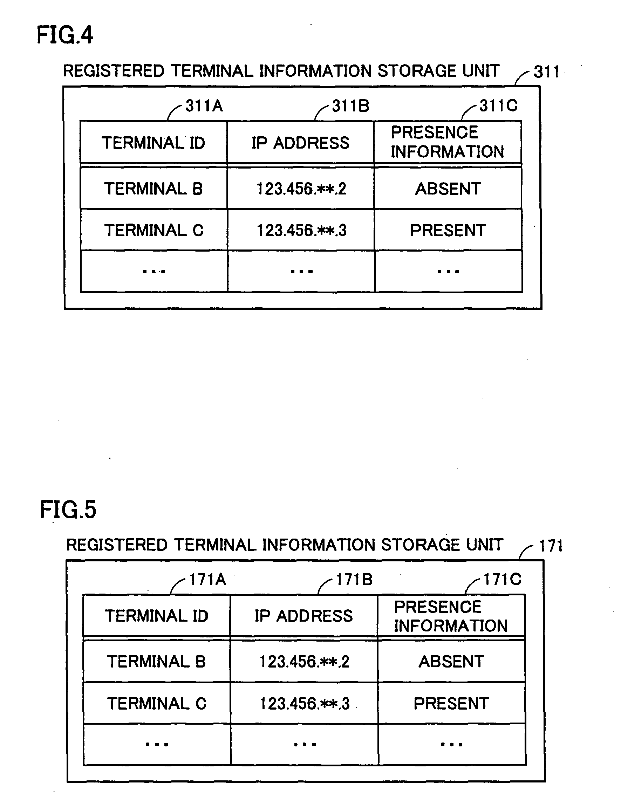

Referring to Fig. 4, registered terminal information storage unit 311 stores a terminal ID 3 11 A as a piece of information for identifying each IP telephone terminal, an IP address 311B given (assigned) to each telephone terminal, and presence information 311C as a piece of information related to the state of user of each telephone terminal transmitted from each telephone terminal, in association with each other. By way of example, a telephone terminal having terminal ID "terminal B" has an IP address "123.456.**.2" assigned thereto, and information that the user of terminal B is "absent" is recorded.

Returning to Fig. 1, IP telephone terminal 1 includes a storage unit 17.

Referring to Fig. 3, storage unit 17 includes a registered terminal information storage unit 171, a message packet storage unit 172, a message packet management information storage unit 173, a to-be-attached voice information storage unit 174, a received voice data storage unit 175, a received voice management information storage unit 176, and a program storage unit 177.

As will be described later, IP telephone terminal 1 makes an inquiry about the information related to the IP telephone terminal registered with the SIP server 3. In response to the inquiry, presence management unit 31 transmits information stored in registered terminal information storage unit 311 to IP telephone terminal 1. In registered terminal information storage unit 171, information received from presence management unit 31 of SIP server 3 is stored.

Referring to Fig. 5, similar to registered terminal information storage unit 311, registered terminal information storage unit 171 stores a terminal ID 171A, an IP address 171B, and presence information 171C, in association with each other.

Message packet storage unit 172 stores a packet for transmitting a message to be sent, recorded on IP telephone terminal 1.

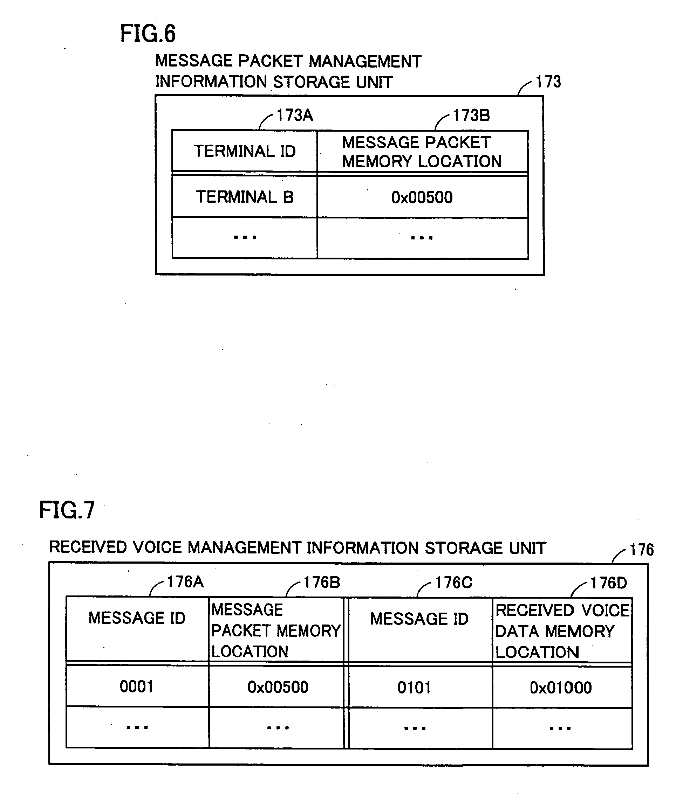

Referring to Fig. 6, message packet management information storage unit 173 stores a terminal ID 173A as a piece of information for identifying the telephone terminal as the destination for transmitting the message, and a message packet memory location 173B as a piece of information for identifying the location for saving the message packet to be transmitted in message packet storage unit 172, in association with each other.

To-be-attached voice information storage unit 174 temporarily stores voice information used for generating the message packet.

Received voice data storage unit 175 stores voice data transmitted as a message or a reply from other telephone terminal or terminals.

Referring to Fig. 7, received voice management information storage unit 176 stores: a message ID 176A as unique value assigned to each message; a message packet memory location 176B as a location for saving the message identified by message ID 176A in message packet storage unit 172; a message ID 176C as an ID related to the voice data transmitted from another telephone terminal as a reply to message ID 176A; and received voice data memory location 176D as a piece of information for identifying the location for storing the voice data of the message identified by message ID 176C in received voice data storage unit 175.

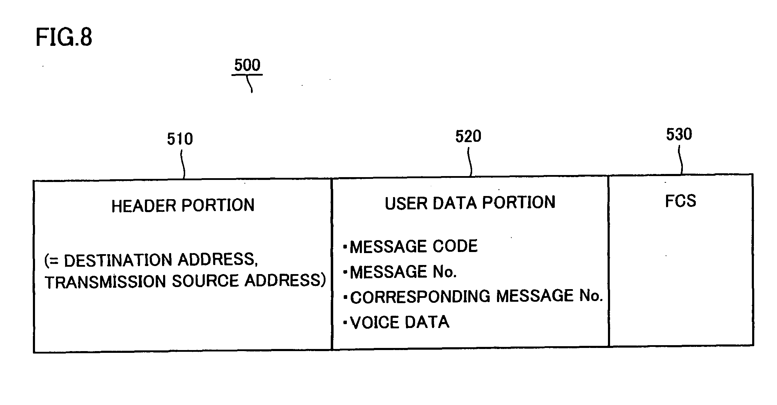

Referring to Fig. 8, a message packet 500 includes a header portion 510, a user data portion 520, and an FCS (Frame Check Sequence) 530. Header portion 510 includes a destination address and a transmission source address. Message packet 500 is generated when the telephone terminal as the destination is not connectable to the network 5 (when it is not registered with SIP server 3). Therefore, after the telephone terminal as the destination is registered with SIP server 3 and an IP address is assigned by SIP server 3, the IP address is set as the destination address in header portion 510 of message packet 500.

User data portion 520 includes: a code (message code) indicating that the message packet 500 is generated for transmitting the voice recorded as a message on IP telephone terminal 1; a message number (message No.) as a number allotted to distinguish each message every time a message is recorded on IP telephone terminal 1; a corresponding message number (corresponding message No.) indicating, when the message of interest in the message packet 500 is a reply to a message transmitted from another telephone terminal, the message number of the message sent from said another terminal; and voice data representing the message contents.

The configuration of IP telephone terminal 1 in accordance with the present embodiment has been described. IP telephone terminal 2 may also have a similar configuration as IP telephone terminal 1 and, therefore, detailed description thereof will not be repeated here.

In the present embodiment, when a user executes a process for communication with a prescribed terminal, for example, by operating operation unit 16 of IP telephone terminal 1 and a session with the prescribed terminal could not be established, it is possible to record a user message on IP telephone terminal 1. Further, in IP telephone terminal 1, information for identifying a telephone terminal that is registered with SIP server 3 is managed. If IP telephone terminal 1 determines that the counterpart terminal (the "prescribed terminal" mentioned above) has registered with SIP server 3, IP telephone terminal 1 transmits the message packet recorded and stored with the prescribed terminal being the destination, to the prescribed terminal.

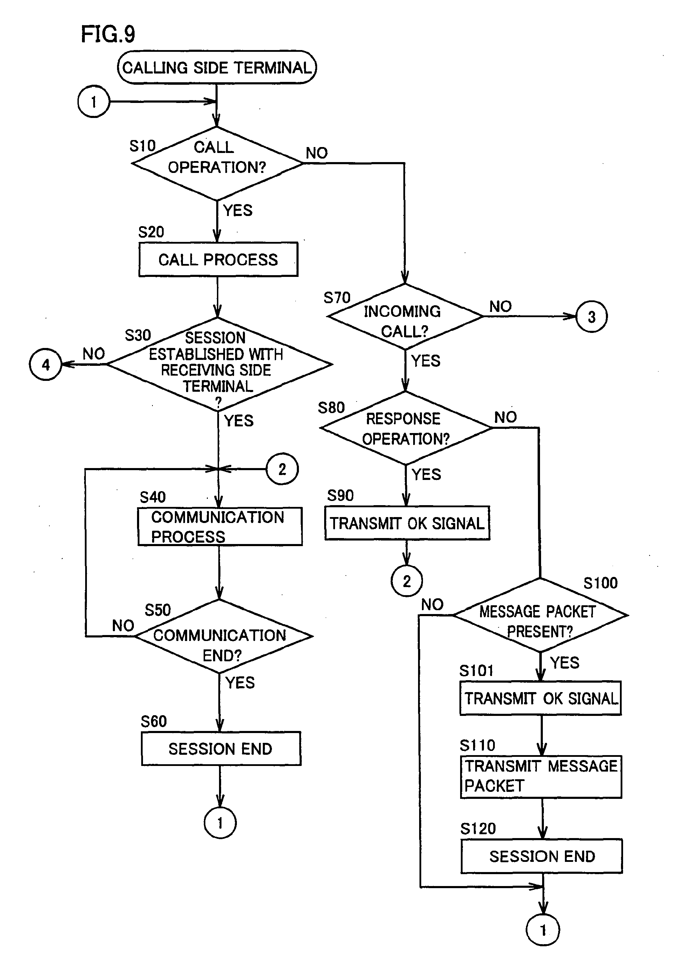

A process executed by control unit 10 to have the IP telephone terminal 1 function in this manner will be described with reference to Figs. 9 to 11, which are flowcharts of the process.

First, referring to Fig. 9, the process on the calling side terminal starts at step S10, at which control unit 10 determines whether or not an operation for calling a prescribed terminal as a destination has been done on operation unit 16, and if it is determined that such an operation has been done, the process proceeds to step S20 and if not, to step S70.

At step S20, control unit 10 executes a calling process including a process for requesting a call to the prescribed terminal to SIP server 3, and then the process proceeds to step S30.

At step S30, control unit 10 determines whether or not telephone control unit 11 has established a session with the receiving side terminal (here, the "prescribed terminal"), and if it is determined that the session has been established, the process proceeds to step S40, and if not, to step S210.

At step S40, a process for normal communication is executed, and at step S50, whether or not conditions for ending a communication (such as an operation for ending communication on IP telephone terminal 1 or the prescribed terminal) have been satisfied is determined. If the conditions are determined to be satisfied, the session ends at step S50, and the process returns to step S10.

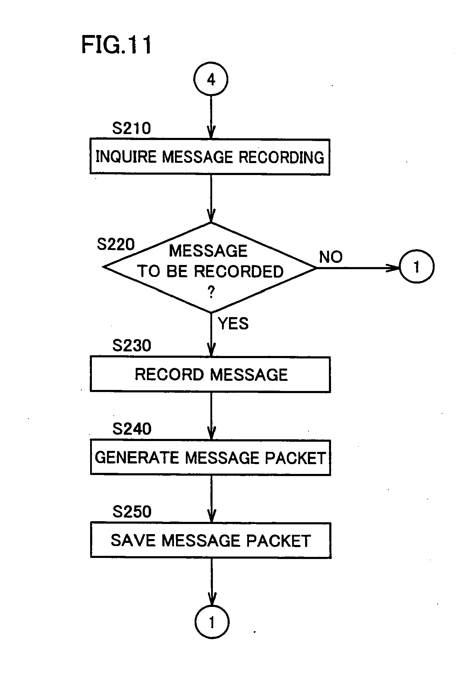

Referring to Fig. 11, at step S210, control unit 10 inquires of the user as to whether a message to be transmitted to the prescribed terminal should be recorded or not, and the process proceeds to step S220. The inquiry here is realized by providing a display device such as an LCD (Liquid Crystal Display) on IP telephone terminal 1 and by displaying a corresponding message (such as "Will your record a message?") on the display device.

At step S220, whether the user instruction to record a message has been input through operation unit 16 or not is determined, and if it is determined that the information to record has been input, the process proceeds to step S230, and if it is determined that information not to record is input, the process returns to step S10.

At step S230, control unit 10 records a message with the voice information input by the user through microphone 14 stored in to-be-attached voice information storage unit 172, and the process proceeds to step S240.

At step S240, control unit 10 generates a message packet such as described with reference to Fig. 8, using the message (voice data) recorded at step S230, and the process proceeds to step S250.

At step S250, the message packet generated at step S240 is stored in message packet storage unit 172, and information related to the message packet is stored in message packet management information storage unit 173. Then the process returns to step S10.

In message packet management information storage unit 173, information for identifying the receiving side terminal as the object of call process at step S20 is stored as terminal ID173A, and the location for storing the message packet saved in message packet storage unit 172 is stored at message packet memory location 173B.

Returning to Fig. 9, at step S70, control unit 10 determines whether or not there has been an incoming call from another telephone terminal. If there has been an incoming call, the process proceeds to step S80 and if it is determined that there has been no incoming call by that time point, the process proceeds to step S 130.

At step S80, control unit 10 determines whether an operation has been made to respond to the incoming call through operation unit 16, and if such operation is determined to be done, the process proceeds to step S90 and if such operation has not been done (for a pre-set seconds from the determination at step S70 that there has been an incoming call), the process proceeds to step S100.

At step S90, an OK signal is transmitted to the calling telephone terminal, and the process proceeds to step S40. Then, IP telephone terminal 1 establishes a session with the calling telephone terminal, and a normal communication process (step S40) is executed.

On the other hand, at step S100, whether or not there is a message packet related to the calling telephone terminal stored in message packet storage unit 172 is determined. If it is determined to be stored, the process proceeds to step S 101 and, if not, the process returns to step S10.

Here, the determination at step S100 is realized by determining whether or not the terminal ID 173A of message packet management information storage unit 173 includes the information (terminal ID) for identifying the calling telephone terminal, which is included in the data received when the incoming call is detected at step S70.

At step S101, control unit 10 transmits an OK signal to the calling telephone terminal, and the process proceeds to step S 110.

At step S 110, control unit 10 transmits a message packet addressed to the calling telephone terminal, among the message packets stored in message packet storage unit 172, to the telephone terminal as the destination, and the process proceeds to step S120. The IP address of the calling telephone terminal is included in the data transmitted when the incoming call is detected at step S70. At step S110, control unit 10 inserts the IP address of the calling telephone terminal into the destination address of header portion 510 of message packet 500, and transmits the message packet 500.

After transmission of message packet 500 is completed, at step S120, control unit 10 terminates the session with the calling telephone terminal, and the process returns to step S10.

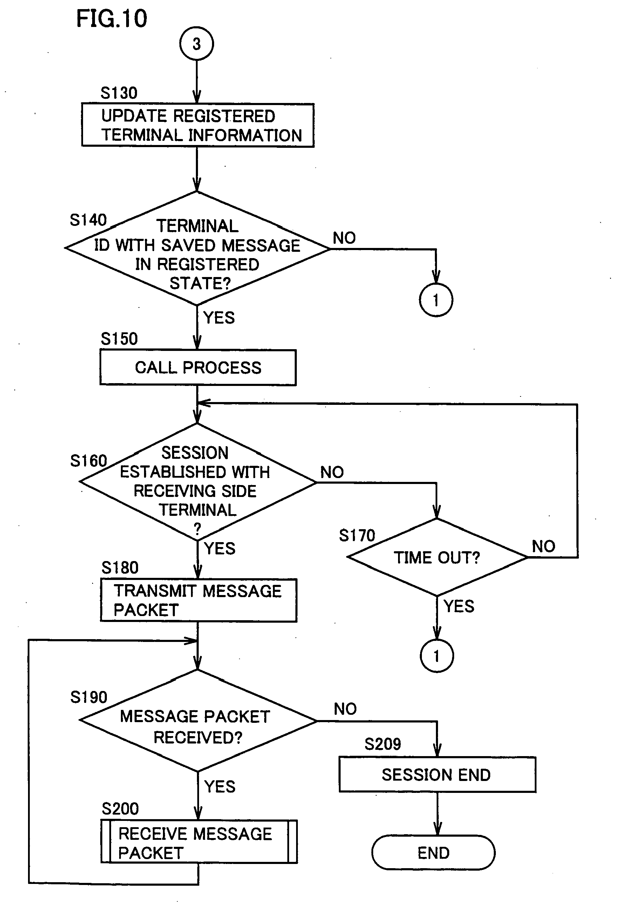

Referring to Fig. 10, at step S 130, control unit 10 accesses to SIP server 3 to update the contents of registered terminal information storage unit 171, and the process proceeds to step S140. By the process of step S130, the contents of information stored in registered terminal information storage unit 171 become the same as the contents of information of telephone terminals stored in registered terminal information storage unit 311, other than the information of IP telephone terminal 1 itself.

At step S 140, control unit 10 determines whether or not there is a terminal registered with SIP server 3 among the terminals as destinations of message packets stored in message packet storage unit 172, and if there is, the process proceeds to step S 150 and if not, the process returns to step S 10.

The determination at step S 140 is realized by determining whether or not there is a terminal ID that matches the one stored as terminal ID 173A in message packet management information storage unit 173, among terminal IDs included in terminal IDs 171A of registered terminal information storage unit 171.

At step S150, a call process for communication with the telephone terminal identified by the terminal ID included both in terminal IDs 171A and 173A is executed, and the process proceeds to step S160.

At step S160, whether the session has been established with the above-described telephone terminal by the call process of step S 150 or not is determined and if it is determined to be established, the process proceeds to step S180. If not, the process proceeds to step S 170.

At step S 170, whether time out occurred or not is determined. Here, time out occurs when a predetermined time period has passed from the start of call process at step S150. If the occurrence of time out is determined, control unit 10 returns the process to step S10.

At step S 180, control unit 10 transmits, to the counterpart telephone terminal with which the session has been established at step S160, the message packet addressed to the terminal, and then the process proceeds to step S 190.

At step S 190, whether or not a message packet has been received from the terminal to which the message packet was transmitted at step S 180 is determined, and if the message packet is determined to be received, the process proceeds to step S200. If not, the session is terminated at step S209 and the process ends.

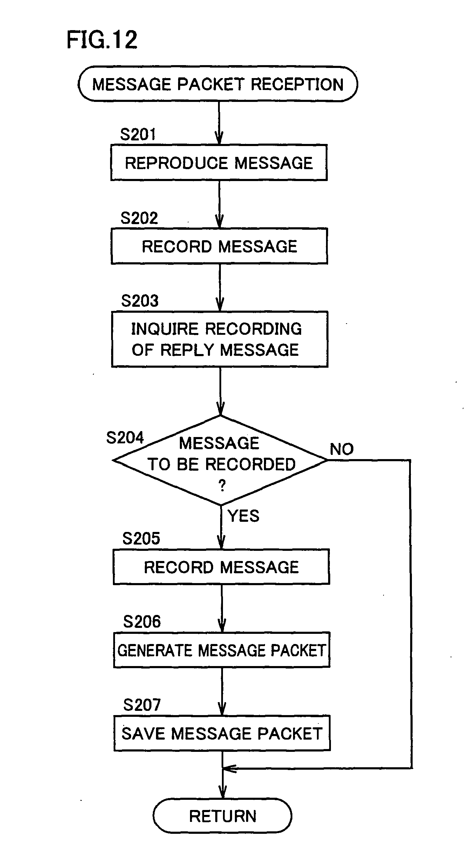

At step S200, a process for receiving the transmitted message packet is executed, and the process returns to step S190. Here, the contents of process at step S200 will be described with reference to Fig. 12 showing the sub-routine of the process.

Referring to Fig. 12, at step S201, control unit 10 decodes and reproduces the voice data included in the received message packet, and the process proceeds to step S202.

Here, whether the message packet has been received or not can be determined by determining whether the user data of the received packet (user data portion 520 of Fig. 8) includes a message code or not.

At step S202, the message of which reproduction started at step S201 is recorded (the voice output by reproduction is encoded and stored in received voice data storage unit 175), and the process proceeds to step S203.

At step S203, control unit 10 inquires of the user of IP telephone terminal 1 as to whether a reply message to the message reproduced at step S201 should be recorded or not, and the process proceeds to step S204. The inquiry may be the same as that of step S210 (see Fig. 11).

At the time when the message is recorded at step S202, information is appropriately recorded in received voice management information storage unit 176, based on the value of message ID included in the packet in which the message has been transmitted. Specifically, the voice data is stored in association with the message ID that matches with the "corresponding message No." included in the packet used at the time of transmission of the message, among the message IDs 176A of received voice management information storage unit 176. Further, the data stored as "message No." is stored in association with the message ID described above, of message ID 176A. Further, in message ID 176A, information identifying the location of storing the message at step S202 in received voice data storage unit 175 is stored, in received voice data memory location 176D.

At step S204, as a result of inquiry of step S203, if it is determined that information to record the message has been input to operation unit 16, the process proceeds to step S205. If it is determined that information not to record the message has been input, control unit 10 directly returns the process to step S10.

At step S205, control unit 10 converts the voice input through microphone 14 to data, which is temporarily stored in to-be-attached voice information storage unit 174. Then, the process proceeds to step S206.

At step S206, using the voice data stored in to-be-attached voice information storage unit 174 at step S205, a message packet is generated, and the process proceeds to step S207. Generation of message packet at step S206 may be done in the similar manner as packet generation at step S240 (see Fig. 11).

At step S207, control unit 10 has the message packet generated at step S206 stored in message packet storage unit 172, and has the information related to the message packet stored in message packet management information storage unit 173. Then, the process returns to Fig. 10.

In the embodiment described above, if the IP telephone terminal 1 outputs a call request based on information input to operation unit 16 and a session could not be established with a prescribed terminal (for example, IP telephone terminal 2), voice input through microphone 14 is recorded, and if the prescribed terminal mentioned above reaches a connectable state, the voice is transmitted to the prescribed terminal.

In the embodiment described above, when the message is recorded at step S230 (see Fig. 11) or at step S205 (Fig. 12), a message packet using the voice data based on the recorded message is generated immediately thereafter.

In the IP telephone system in accordance with the present invention, it is not necessary to generate the message packet immediately after recording as described above. Specifically, the message packet may be generated when the process of transmitting the message packet is executed at step S 110 (see Fig. 9).

In the embodiment described above, if the session with the telephone terminal having the message saved and having the terminal ID stored is established (YES at step S160), control unit 10 transmits the message packet only once at step S 180.

In such a case, control unit 10 may transmit the message packet at every prescribed time interval.

Further, in the embodiment described above, control unit 10 accesses to SIP server 3 to perform the process of updating the information stored in registered terminal information storage unit 171 at step S 130 (see Fig. 10).

Control unit 10 may update the information at a constant time interval (for example, one minute), and the determination of step S 140 may be made.

In the embodiment described above, transmission of information other than the message packet at the time of transmitting the message packet (steps S 110, S 180) is not specifically mentioned. A piece of information (such as stylized data) to have voice data urging a reply to the message of the packet reproduced on the counterpart terminal may be attached to the packet (that is, transmitted immediately before or immediately after the message packet). Then, on the telephone terminal that received the message packet, the voice data corresponding to the received message packet is reproduced and, in addition, the voice data based on the attached information (a message urging recording and transmission of a reply to the message packet) is reproduced.

As described above, the attached data is stored, for example, in storage unit 17. The attached data may be stylized data as mentioned above, or it may be generated by the user.

In the embodiment described above, when IP telephone terminal 1 receives the message packet, voice data corresponding to the message packet is automatically reproduced, and the voice based on the voice data is stored in received voice data storage unit 175.

If the received message packet has been transmitted as a reply to a certain message packet, the voice data is stored in association with the information identifying the certain message packet (message ID 176A of received voice management information storage unit 176).

Further, when the message packet is received, the voice data corresponding to the message data is automatically reproduced as described above, on condition that control unit 10 determined that the message code is included in message packet 500.

In the present embodiment, the "specific data" is formed by the message code included in the message packet.

In the embodiment described above, if it is determined that the terminal ID saving the message is in the registered state at step S 140, a call process to the terminal ID is executed at step S 150, and if it is determined at step S160 that a session is established, the message packet is transmitted to the terminal ID at step S180. Here, the number of telephone terminals as the counterpart of transmission is not limited to "1". Specifically, transmission of message packet at step S 180 may be multi-cast.

In the embodiment described above, only after the terminal ID saving the message is determined to be in the registered state at step S 140, the call process to the telephone terminal identified by the terminal ID is started. To the telephone terminal identified by the terminal ID saving the message, the call process of step S 150 may be executed no matter whether the telephone terminal is in the registered state or not, at every constant time interval, without making the determination of step S 140.

In the present embodiment, input of voice information through a microphone 14 and input of information by an operation on operation unit 16 has been described as methods of inputting information by the user to the IP telephone terminal 1. All information may be input by voice through microphone 14. In that case, if control unit 10 has a speech recognition function, control unit 10 may receive input of much more information. Known technique may be used for speech recognition and, therefore, detailed description will not be given here.

In the embodiment described above, when an incoming call is received at step S70, whether a communication should be made or a message packet is to be transmitted is determined dependent on presence/absence of a response operation by the user at step S80. Other information may be used to determine which process is to be executed.

As represented by presence information 311C of Fig. 4, in SIP server 3, presence information (such as the information that the user is present or absent) of each telephone terminal is registered. Specifically, each telephone terminal transmits the presence information to SIP server 3, and the information is stored.

It is also possible that IP telephone terminal 1 also stores the presence information to be transmitted to SIP server 3 in itself, and whether the process for communication from step S90 or the process for transmitting message packet from step S 100 is to be executed may be determined dependent on the contents of the presence information.

Specifically, by way of example, control unit 10 may control the process such that the contents of presence information of the terminal itself is checked and, if it indicates that the user is "present", the process proceeds to step S90, and if the user is "absent", the process proceeds to step S100.

Although the present invention has been described and illustrated in detail, it is clearly understood that the same is by way of illustration and example only and is not to be taken by way of limitation, the scope of the present invention being interpreted by the terms of the appended claims.

## Claims

1. An IP (Internet Protocol) telephone terminal (1) having a telephone function using an IP network, comprising:
an input unit (14 ∼ 16, S10) receiving an input of information;
a first output unit (S20) outputting a call request for communication with a prescribed terminal, based on the input of information to said input unit;
a first determining unit (S30) determining whether or not a connection has been established by the call request based on the input of information to said input unit;
a recording unit (S210 ∼ S230) recording, when it is determined by said first determining unit that the connection failed, voice input through said input unit;
a second determining unit (S140) determining whether or not said prescribed terminal is in a state connectable through said IP network;
a second output unit (S150) outputting a call request for communication with said prescribed terminal, based on a determination by said second determining unit that said prescribed terminal has reached a state connectable through said IP network; and
a transmitting unit (S160 ∼ S 180) transmitting, when connection based on the call request output by said second output unit is determined to be established, the voice recorded by said recording unit to said prescribed terminal through said IP network.

2. The IP telephone terminal according to claim 1, wherein
said second determining unit determines, at every constant time interval, whether or not said prescribed terminal is in a state connectable through said IP network.

3. The IP telephone terminal according to claim 1, further comprising
a storage unit (17) storing information; wherein
said transmitting unit transmits, when connection based on the call request output by said second output unit is determined to be established, the voice recorded by said recording unit together with voice information stored in said storage unit.

4. The IP telephone terminal according to claim 1, wherein
said transmitting unit transmits the voice recorded by said recording unit together with specific data that identifies the voice as such.

5. The IP telephone terminal according to claim 4, wherein
said transmitting unit transmits the voice recorded by said recording unit as a packet; and
said specific data is a specific code included in the packet of voice recorded by said recording unit.

6. The IP telephone terminal according to claim 4, wherein
said recording unit records, when said specific data is transmitted, the voice transmitted together with the specific data.

7. The IP telephone terminal according to claim 1, wherein
said second output unit outputs, when it is determined by said second determining unit that said prescribed terminal is in a state connectable through said IP network, a call request for communication with said prescribed terminal at every prescribed time interval.

8. An IP telephone system comprising:
an IP telephone terminal (1) having a telephone function using an IP network, and
a server (3) connected to said IP telephone terminal through said IP network, wherein
said IP telephone terminal includes:
an input unit (14 ∼ 16, S 10) receiving an input of information;
a first output unit (S20) outputting a call request for communication with a prescribed terminal to said server, based on the input of information to said input unit;
a first determining unit (S30) determining whether or not a connection has been established by the call request based on the input of information to said input unit;
a recording unit (S210 ~ S230) recording, when it is determined by said first determining unit that the connection failed, voice input through said input unit;
a second determining unit (S140) determining whether or not said prescribed terminal is in a state connectable through said IP network;
a second output unit (S150) outputting a call request for communication with said prescribed terminal to said server, based on a determination by said second determining unit that said prescribed terminal has reached a state connectable through said IP network; and
a transmitting unit (S160 ~ S 180) transmitting, when connection based on the call request output by said second output unit is determined to be established, the voice recorded by said recording unit to said prescribed terminal through said IP network.

9. A recording medium (17) recording a computer readable program for controlling an IP telephone terminal having a telephone function using an IP network, causing a computer (1) to execute the steps of:
receiving an input of information (S10);
outputting a call request for communication with a prescribed terminal, based on the input of information (S20);
determining whether or not a connection has been established by the call request based on the input of information (S30);
when it is determined that the connection failed, receiving input of voice and recording the voice (S210 ~ S230);
determining whether or not said prescribed terminal is in a state connectable through said IP network (S 140);
outputting a call request for communication with said prescribed terminal, based on a determination that said prescribed terminal has reached a state connectable through said IP network (S 150); and
transmitting, when connection based on the call request, which is output based on the determination that the prescribed terminal is in a state connectable through said IP network, is determined to be established, said recorded voice to said prescribed terminal through said IP network (S160 ∼ S 180).
